# EUROPEAN PATENT SPECIFICATION

(11) **EP 2 908 052 B1**
(45) Date of publication and mention of the grant of the patent: **19.06.2019**
(21) Application number: 13846429.2
(22) Date of filing: 01.10.2013
(51) Int. Cl.: F23K 5/00, F23N 1/00

(54) **GAS CONTROL VALVE**
GASREGELVENTIL
SOUPAPE DE COMMANDE DE GAZ

(30) Priority: 15.10.2012 JP 2012227960
(43) Date of publication of application: 19.08.2015
(73) Proprietor: Mikuni Corporation, Tokyo 101-0021 (JP)
(72) Inventor: SATO, Hirokazu, Iwate-gun Iwate 020-0188 (JP); OKUDERA, Taichi, Iwate-gun Iwate 020-0188 (JP)
(74) Representative: Vossius & Partner Patentanwälte Rechtsanwälte mbB
(86) International application number: PCT/JP2013/076670
(87) International publication number: WO 2014/061440

(56) References cited:
- EP-A1- 2 843 310
- DE-A1- 19 807 503
- DE-C1- 4 111 259
- JP-A- 2001 525 045
- JP-U- H0 278 869
- JP-U- H0 414 868
- JP-U- S6 375 670
- US-A- 3 092 142
- US-A- 4 328 831

## Description

### TECHNICAL FIELD

The present invention relates to a gas control valve to control a supply amount of fuel gas to gas equipment.

### BACKGROUND ART

Conventionally, there has been proposed a heat power control apparatus (gas control valve) to control heat power of a gas burner by increasing and decreasing a gas supply amount to the gas burner (for example, see Patent Document 1). FIG. 7 is a view illustrating a schematic structure of a gas control valve disclosed in Patent Document 1.

As illustrated in FIG. 7, in the gas control valve of Patent Document 1, an open-close plate 5 is intimately contacted to an intimate contact face 62 being a lower face of a gas passage plate 6 where a plurality of differently-sized gas passage ports 61a, 61b are formed. Here, a gas amount is controlled to be increased or decreased by allowing gas to flow only through the gas passage port that is faced to a valve-opening portion 51 arranged at the open-close plate 5 with the open-close plate 5 being rotated via a rotation shaft 42 that is connected to an output shaft of a motor. The open-close plate 5 forms the intimate contact face 62 with the gas passage plate 6 as being urged upward in the drawing by a spring 43. Another gas control valve is known from DE19807503 and DE4111259.

### Patent Document

Patent Document 1: Japanese Patent No. 4097630

In an assembling process of the gas control valve disclosed in Patent Document 1, as illustrated in FIG. 8, the spring 43, the open-close plate 5, and the gas passage plate 6 are assembled in the order thereof into an accommodation portion 45 that is formed at a main body 44. In this assembling process, it is required to perform assembling by placing the open-close plate 5 on the spring 43 and pressing in the gas passage plate 6 from the above.

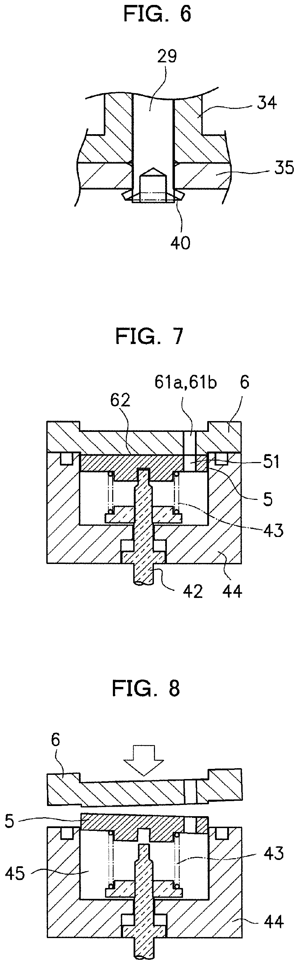

Here, there has been a problem that operation is difficult to be performed because the spring 43 and the open-close plate 5 are required to be assembled in a small space in the accommodation portion 45. Further, since the open-close plate 5 is configured to be supported by the spring 43, the open-close plate 5 is protruded from an upper face of the main body 44 as illustrated in FIG. 8 on a stage before the spring 43 is compressed by the gas passage plate 6 being pressed in from the upper side of the open-close plate 5. Accordingly, there has been a problem that the open-close plate 5 becomes in an unstable state and assembling of the gas passage plate 6 is difficult to be performed.

Further, since the gas passage plate 6 is pressed in from the upper side of the open-close plate 5 in an unstable state of simply placing the open-close plate 5 on the spring 43, there has been a risk to cause damage on the intimate contact face 62 formed between the open-close plate 5 and the gas passage plate 6. When the intimate contact face 62 is damaged, there arises a problem that accuracy of gas amount control is degraded because of gas leakage through the damaged part.

Further, when gas leakage is found through the intimate contact face with a product inspection of the gas control valve, it is required to disassemble the assembled spring 43, open-close plate 5, and gas passage plate 6 and to reassemble with new components. Accordingly, there has been a problem of loss increase with a rework operation.

### SUMMARY OF THE INVENTION

To address the above issues, an object of the present invention is to provide a gas control valve capable of being easily assembled and reducing a risk to cause damage on an intimate contact face during assembling. Further, another object of the present invention is to reduce loss with rework in an assembling process of the gas control valve.

The present invention relates to a gas control valve according to independent claim 1. Preferred embodiments are recited in the dependent claims.

To solve the abovementioned problems, in the present invention, a component group that includes at least a rotational disk, a fixed disk, and a spring that urges the rotational disk toward the fixed disk is arranged separately from a main body as a component unit. Then, assembling of the gas control valve can be performed by accommodating the component unit in an accommodation portion of the main body. Here, the component unit includes an axial-center guide to perform positioning of the rotational disk and the fixed disk, and a power transmission member to transmit power of a motor to the rotational disk.

According to the present invention structured as described above, since the assembling of the component unit can be performed separately from the main body, it is not required to perform an operation at a small space in the accommodation portion of the main body. Accordingly, it is possible to easily perform assembling of the structural component group of the component unit being the rotational disk, the fixed disk, and the spring.

Further, according to the present invention, it is not required to directly assemble the spring, the rotational disk, and the fixed disk in the order thereof at the accommodation portion of the main body. It is possible to assemble the fixed disk, the rotational disk, and the spring in the order thereof at a space being different from the accommodation portion. That is, the respective components can be assembled sequentially from the side of the intimate contact face formed between the fixed disk and the rotational disk with the spring being assembled at a later phase. Moreover, since positioning of the fixed disk and the rotational disk is performed with the axial-center guide, positional deviation between the fixed disk and the rotational disk can be prevented at the time of assembling. Accordingly, the component unit can be assembled in a state that the fixed disk and the rotational disk are stabilized. Further, it is possible to reduce a risk to cause damage on the intimate contact face during assembling the component unit.

Further, according to the present invention, assembling of the gas control valve can be performed as being divided into an anterior process to assemble the component unit and a posterior process to assemble the assembled component unit to the main body. Accordingly, it is possible to perform inspection separately on the component unit at the time when the anterior process is completed. Even when gas leakage is found at that time, it is not required to perform a complicated operation to disassemble the component group from the main body. It is simply required to reassemble the component unit at a space being different from the main body. Thus, it is possible to reduce loss with rework in the assembling process of the gas control valve.

### BRIEF DESCRIPTION OF THE DRAWINGS

FIG. 1 is a schematic view illustrating a structure of a main part of a gas control valve according to an embodiment.
FIG. 2 is a schematic view illustrating a structure of the main part of the gas control valve according to the embodiment.
FIG. 3 is a view illustrating a specific structural example of the gas control valve according the embodiment.
FIG. 4 is a sectional view of the gas control valve according to the embodiment.
FIG. 5 is a view illustrating states of the gas control valve of the present embodiment before and after a component unit is assembled to a main body.
FIG. 6 is a view illustrating a modified example of a retaining portion in the present embodiment.
FIG. 7 is a schematic view illustrating a schematic structure of a gas control valve in the related art.
FIG. 8 is a schematic view illustrating an assembling process of the gas control valve in the related art.

### EMBODIMENT OF THE INVENTION

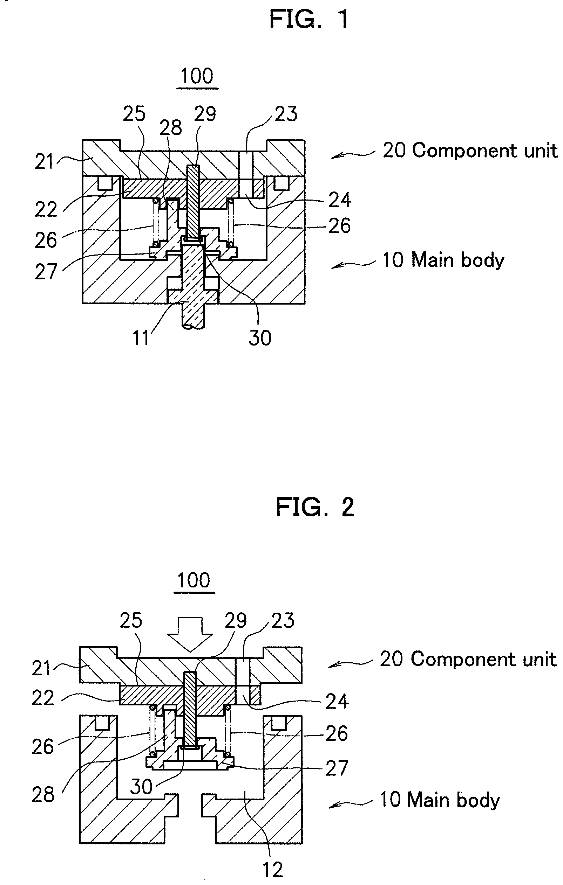

In the following, embodiments of the present invention will be described with reference to the drawings. Here, references indicated in FIGs. 1 to 6 have no relation with references indicated in FIGs. 7 and 8. FIGs. 1 and 2 are schematic views illustrating structure of a main part of a gas control valve 100 of the present embodiment. The gas control valve 100 of the present embodiment is for being adopted to gas equipment such as a gas stove to control heat power of a gas burner by increasing and decreasing a gas supply amount to the gas burner.

Specifically, as illustrated in FIGs. 1 and 2, a rotational disk 22 is intimately contacted to an intimate-contact face 25 being a lower face of a fixed disk 21 where a fixed-side communication hole 23 is formed. The rotational disk 22 is urged upward in the drawings by a spring 26 to form an intimate-contact face 25 with the fixed disk 21. The fixed-side communication hole 23 arranged at the fixed disk 21 is a through-hole having given opening area. Meanwhile, a rotation-side communication hole 24 arranged at the rotational disk 22 is shaped to be capable of controlling a gas flow rate toward the fixed-side communication hole 23 in accordance with rotation of the rotational disk 22.

Gas supplied from a gas passage (not illustrated) at the upstream side (right side in the drawings) is to be flown toward a gas burner side (not illustrated) (upward in the drawings) through the rotation-side communication hole 24 and the fixed-side communication hole 23. Here, the rotational disk 22 is rotated by a motor (not illustrated) to flow gas while an appropriate position of the rotation-side communication hole 24 arranged at the rotational disk 22 is faced to the fixed-side communication hole 23. Thus, a supply amount of fuel gas to the gas burner is controlled. That is, a flow rate of fuel gas to be supplied to the gas burner is controlled in accordance with a position of the rotation-side communication hole 24 being faced to the fixed-side communication hole 23.

Here, power of the motor is transmitted to the rotational disk 22 via a power transmission disk 27 that is connected to a motor rotation shaft 11. Thus, the rotational disk 22 is rotated along with rotation of the motor. In addition to the motor rotation shaft 11, the power transmission disk 27 includes a power transmission member 28 to transmit power from the motor to the rotational disk 22. This configuration differs from a configuration in the related art where the motor rotation shaft 42 is directly connected to the rotational disk 5 as illustrated in FIG. 7.

The gas control valve 100 of the present embodiment includes a main body 10 and a component unit 20 that is arranged separately from the main body 10. The main body 10 has an accommodation portion 12 that accommodates the component unit 20. The component unit 20 is arranged as a component group that includes the fixed disk 21, the rotational disk 22, the spring 26, the power transmission disk 27, an axial-center guide 29, and a retaining portion 30. The axial-center guide 29 is a pin for performing positioning of the fixed disk 21 and the rotational disk 22.

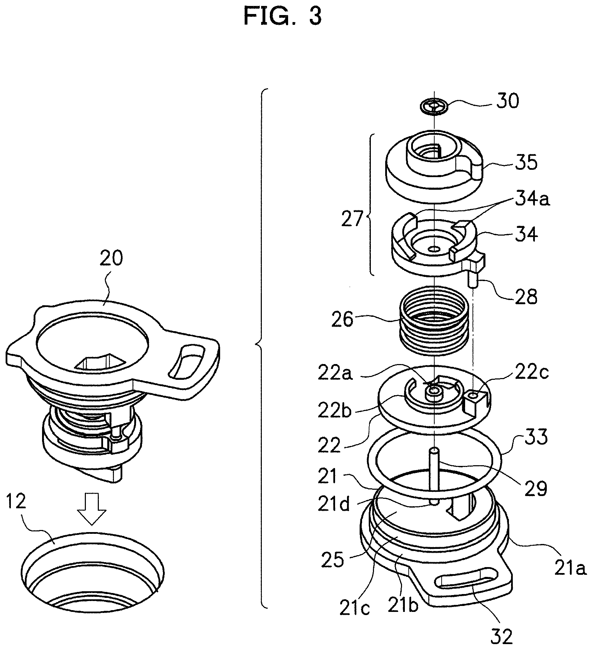

FIG. 3 is a view illustrating a specific structural example of the gas control valve 100 of the present embodiment schematically illustrated in FIGs. 1 and 2. In FIG. 3, the same references are given to structural elements having the same functions as the structural elements illustrated in FIGs.1 and 2. FIG. 3 illustrates an assembling process of the component unit 20 as well.

As illustrated in FIG. 3, the fixed disk 21 has a tri-level structure with a disk portion 21a having a first diameter, a disk portion 21b having a second diameter smaller than the first diameter, and a disk portion 21c having a third diameter smaller than the second diameter. The intimate-contact face 25 is formed at the disk portion having the third diameter being the smallest. The disk portion 21b having the second diameter is used for positioning of the component unit 20 with the main body 10 when being accommodated in the accommodation portion 12. A screw hole 32 is formed at the disk portion 21a having the first diameter being the largest, so that the assembled component unit 20 is screw-clamped to the main body 10 after being accommodated in the accommodation portion 12 of the main body 10.

A concave portion 21d for standing the axial-center guide 29 is formed at the center of the fixed disk 21 (the disk portion 21c having the third diameter). Further, a through-hole 22a is formed at the center of the rotational disk 22. For assembling the component unit 20, first, one end of the axial-center guide 29 is press-fitted to the concave portion 21d of the fixed disk 21 so that the axial-center guide 29 is stood on the center of the fixed disk 21. Next, an O-ring 33 is put around an outer circumferential portion of the disk portion 21c having the third diameter, and then, the axial-center guide 29 is inserted to the through-hole 22a of the rotational disk 22. Thus, positioning of the fixed disk 21 and the rotational disk 22 are performed with the axial-center guide 29.

An arc-shaped guide 22b having approximately the same diameter as an inner diameter of the spring 26 is formed at the rotational disk 22. After assembling of the rotational disk 22 is completed, the spring 26 is placed on the rotational disk 22 along the guide 22b, and then, the power transmission disk 27 is pressed in downward from the above. Here, the power transmission disk 27 is structured with a carriage member 34 and a link member 35, each having a through-hole at the center thereof.

For the power transmission disk 27 being pressed in downward from the above of the spring 26, the axial-center guide 29 is inserted to the through-hole of the power transmission disk 27. Finally, the retaining portion 30 is attached to the other end of the axial-center guide 29. Thus, assembling of the component unit 20 is completed. In FIG. 3, a nut is used as the retaining portion 30. Owing to that the axial-center guide 29 is press-fitted to an hole of the nut, each component can be prevented from dropping from the axial-center guide 29.

The link member 35 is connected to the motor rotation shaft 11 to be rotated along with rotation of the motor. The carriage member 34 is connected to the link member 35 with a cam 34a to be rotated along with rotation of the motor via the link member 35. That is, the carriage member 34 is rotated along with the link member 35 to transmit power of the motor to the rotational disk 22.

The carriage member 34 is provided with the power transmission member 28 on a face thereof at the side of the rotational disk 22. Meanwhile, the rotational disk 22 is provided with a power transmission member receiver 22c at a side thereof facing the carriage member 34. Then, the power transmission member 28 is inserted to the power transmission member receiver 22c. According to the above, power transmitted from the motor to the power transmission disk 27 via the motor rotation shaft 11 is further transmitted to the rotational disk 22 via the power transmission member 28. That is, in the present embodiment, the motor rotation shaft 11 and the power transmission member 28 collectively serve as a torque transmission shaft to transmit power from the motor to the rotational disk 22.

In the structural example illustrated in FIG. 3, the power transmission member 28 is arranged at the outer side of the spring 26. In the structural example illustrated in FIGs. 1 and 2, the power transmission member 28 is arranged at the inner side of the spring 26. The power transmission member 28 may be located at the outer side or the inner side of the spring 26 as long as space therefor can be ensured. Further, in the present embodiment, the power transmission member 28 is illustrated as being columnar. However, the shape of the power transmission member 28 is not limited thereto.

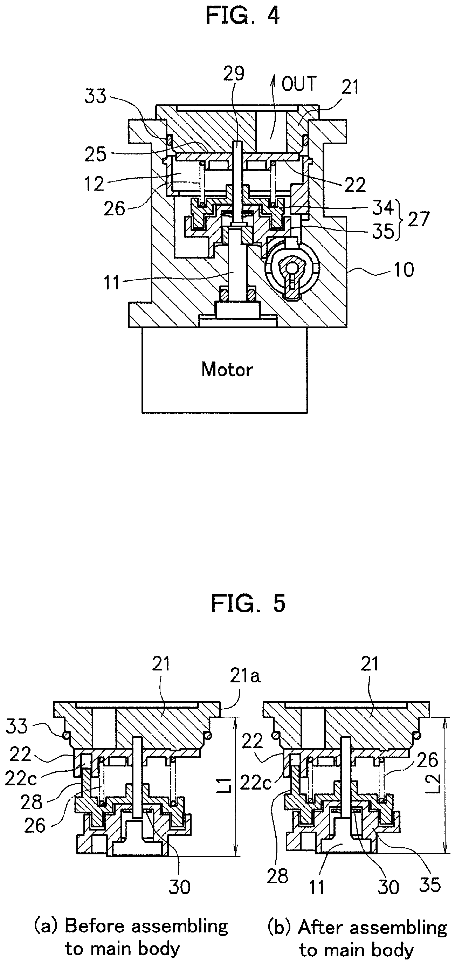

FIG. 4 is a sectional view of the gas control valve 100 in a state that the component unit 20 illustrated in FIG. 3 is accommodated in the main body 10. In FIG. 4, the same references are given to structural elements having the same functions as the structural elements illustrated in FIGs. 1 to 3.

As illustrated in FIG. 4, the outer diameter of the rotational disk 22 is smaller than the inner diameter of the accommodation portion 12 of the main body 10. That is, a gap can be formed between an inner wall face of the accommodation portion 12 and an outer side face of the rotational disk 22. This is because positioning of the rotational disk 22 does not require to utilize the inner wall face of the accommodation portion 12 owing to that the positioning of the fixed disk 21 and the rotational disk 22 is performed with the axial-center guide 29.

FIG. 5 illustrates a part of the gas control valve 100 illustrated in FIG. 4. FIG. 5(a) illustrates a state before the component unit 20 is assembled (screw-clamped) to the main body 10 and FIG. 5(b) illustrates a state after the component unit 20 is assembled (screw-clamped) to the main body 10.

As illustrated in FIG. 5(a), before the component unit 20 is assembled (screw-clamped) to the main body 10, the component unit 20 is not connected to the motor rotation shaft 11 and drive force of the motor is not transmitted to the component unit 20. In this state, the load of the spring 26 is received by the retaining portion 30. Further, the power transmission member 28 is shallowly inserted to the power transmission member receiver 22c to the extent not to depart therefrom. Consequently, the distance between a bottom of the accommodation portion 12 and the disk portion 21a having the first diameter of the fixed disk 21 becomes to L1 that is slightly longer than the depth of the accommodation portion 12.

In contrast, as illustrated in FIG. 5(b), after the component unit 20 is assembled (screw-clamped) to the main body 10, the component unit 20 is connected to the motor rotation shaft 11 and the desired urging force and power transmission passage are obtained with the spring 26 compressed slightly more than the state of FIG. 5(a). In this state, the load of the spring 26 is received by the main body 10. Here, a gap is formed between the retaining portion 30 and the link member 35 to prevent friction occurring therebetween. Further, the power transmission member 28 is inserted to the power transmission member receiver 22c to a predetermined position. Consequently, the distance between the bottom of the accommodation portion 12 and the disk portion 21a having the first diameter of the fixed disk 21 becomes to L2 that is smaller shorter than L1.

As described above in detail, in the present embodiment, the component group including at least the fixed disk 21, the rotational disk 22, and the spring 26 are structured as the component unit 20 separately from the main body 10, so that the gas control valve 100 can be assembled by that the component unit 20 is accommodated in the accommodation portion 12 of the main body 10. Here, the component unit 20 includes the axial-center guide 29 for performing positioning of the fixed disk 21 and the rotational disk 22 and the power transmission member 28 for transmitting power of the motor to the rotational disk 22.

According to the embodiment structured as described above, since the assembling of the component unit 20 can be performed separately from the main body 10, it is not required to perform an operation at a small space in the accommodation portion 12 of the main body 10. Accordingly, it is possible to easily perform assembling of the structural component group of the component unit 20 being the fixed disk 21, the rotational disk 22, the spring 26, and the like.

Further, according to the present embodiment, it is not required to directly assemble the spring 26, the rotational disk 22, and the fixed disk 21 in the order thereof at the accommodation portion 12 of the main body 10. It is possible to assemble the fixed disk 21, the rotational disk 22, and the spring 26 in the order thereof at a wide space being different from the accommodation portion 12. That is, the respective components can be assembled sequentially from the side of the intimate contact face 25 formed between the fixed disk 21 and the rotational disk 22 with the spring 26 being assembled at a later phase. Moreover, since positioning of the fixed disk 21 and the rotational disk 22 is performed with the axial-center guide 29, positional deviation between the fixed disk 21 and the rotational disk 22 can be prevented at the time of assembling. Accordingly, the component unit 20 can be assembled in a state that the fixed disk 21 and the rotational disk 22 are stabilized. Further, it is possible to reduce a risk to cause damage on the intimate contact face 25 during assembling the component unit 20.

Further, according to the present embodiment, assembling of the gas control valve 100 can be performed as being divided into an anterior process to assemble the component unit 20 and a posterior process to assemble the assembled component unit 20 to the main body 10. Accordingly, it is possible to perform inspection separately on the component unit 20 at the time when the anterior process is completed. Even when gas leakage is found at that time, it is not required to perform a complicated operation such as disassembling of the component group from the main body 10. It is simply required to reassemble the component unit 20 at a space being different from the main body 10. Thus, it is possible to reduce loss with rework in the assembling process of the gas control valve 100.

In the description of the abovementioned embodiment, the nut is used as the retaining portion 30. However, the present invention is not limited thereto. For example, as illustrated in FIG. 6, it is also possible that a calking pin 40 is used as a retaining portion.

Further, in the description of the abovementioned embodiment, the fixed-side communication hole 23 of the fixed disk 21 is formed as the through-hole having given opening area and the rotation-side communication hole 24 of the rotational disk 22 is shaped to be capable of controlling a gas flow rate. However, those may be reversed. That is, a rotation-side communication hole of the rotational disk 22 may be a through-hole having given opening area and a fixed-side communication hole of the fixed disk 21 may be shaped to be capable of controlling a gas flow rate.

The abovementioned embodiments are simply examples of actualization of the present invention. The technical scope of the present invention should not be construed in a limited way thereby. The present invention may be actualized variously without departing from the scope or the primary features of the present invention.

### EXPLANATION OF REFERENCES

- 10: Main body
- 12: Accommodation portion
- 20: Component unit
- 21: Fixed disk
- 22: Rotational disk
- 23: Fixed-side communication hole
- 24: Rotation-side communication hole
- 25: Intimate contact face
- 26: Spring
- 27: Power transmission disk
- 28: Power transmission member
- 29: Axial-center guide
- 30: Retaining portion
- 100: Gas control valve

## Claims

1. A gas control valve (100) to control a supply amount of fuel gas to a gas burner by allowing the gas to flow in a state that a rotational disk (22) having a rotation-side communication hole (24) is intimately contacted to an intimate contact face (25) being a lower face of a fixed disk (21) having a fixed-side communication hole (23) and that the rotation-side communication hole (24) is made to face the fixed-side communication hole (23) with rotation of the rotational disk (22), comprising:
a component unit (20) arranged separately from a main body (10), wherein the component unit can be assembled separately from the main body, said component unit (20) being a component group that includes at least the rotational disk (22), the fixed disk (21), and a spring (26) that urges the rotational disk (22) toward the fixed disk (21),
wherein the main body (10) includes an accommodation portion to accommodate the component unit (20),
the component unit (20) includes an axial-center guide (29) to perform positioning of the rotational disk (22) and the fixed disk (21), a power transmission member (28) configured to transmit power of a motor to the rotational disk (22), and a retaining portion (30) attached to an end of the axial-center guide (29).

2. The gas control valve (100) according to claim 1,
wherein the axial-center guide (29) is stood on the center of the fixed disk (21),
a through-hole (22a) is formed at the center of the rotational disk (22), and
positioning of the rotational disk (22) and the fixed disk (21) is performed by inserting the axial-center guide (29) to the through-hole (22a).

3. The gas control valve (100) according to claim 1,
wherein an outer diameter of the rotational disk (22) is smaller than an inner diameter of the accommodation portion.

## Patentansprüche

1. Gasregelventil (100), um eine Zufuhrmenge von Brenngas zu einem Gasbrenner zu regeln, indem es ermöglicht wird, dass das Gas in einem Zustand fließt, in dem eine drehbare Scheibe (22), die ein Verbindungsloch (24) der drehbaren Seite aufweist, in engem Kontakt mit einer Eng-Kontaktfläche (25) steht, die eine untere Fläche einer feststehenden Scheibe (21) ist, die ein Verbindungsloch (23) der festen Seite aufweist, und in dem durch Drehung der drehbaren Scheibe (22) dafür gesorgt wird, dass das Verbindungsloch (24) der drehbaren Seite dem Verbindungsloch (23) der festen Seite gegenüberliegt, das aufweist:
eine Komponenteneinheit (20), die getrennt von einem Hauptkörper (10) angeordnet ist, wobei die Komponenteneinheit getrennt vom Hauptkörper montiert werden kann, wobei die Komponenteneinheit (20) eine Komponentengruppe ist, die mindestens die drehbare Scheibe (22), die feststehende Scheibe (21) und eine Feder (26) aufweist, die die drehbare Scheibe (22) zur feststehenden Scheibe (21) drückt,
wobei der Hauptkörper (10) einen Aufnahmeabschnitt aufweist, um die Komponenteneinheit (20) aufzunehmen,
die Komponenteneinheit (20) eine axiale Mittelführung (29), um die Positionierung der drehbaren Scheibe (22) und der feststehenden Scheibe (21) durchzuführen, ein Leistungsübertragungselement (28), das konfiguriert ist, Leistung eines Motors auf die drehbare Scheibe (22) zu übertragen, und einen Halteabschnitt (30) aufweist, der an einem Ende der axialen Mittelführung (29) angebracht ist.

2. Gasregelventil (100) nach Anspruch 1,
wobei die axiale Mittelführung (29) in der Mitte der feststehenden Scheibe (21) aufgestellt ist,
ein Durchgangsloch (22a) in der Mitte der drehbaren Scheibe (22) ausgebildet ist, und die Positionierung der drehbaren Scheibe (22) und der feststehenden Scheibe (21) durch Einsetzen der axialen Mittelführung (29) in das Durchgangsloch (22a) durchgeführt wird.

3. Gasregelventil (100) nach Anspruch 1,
wobei ein Außendurchmesser der drehbaren Scheibe (22) kleiner ist als der Innendurchmesser des Aufnahmeabschnitts.

## Revendications

1. Soupape de commande de gaz (100) destinée à commander une quantité d'alimentation de gaz combustible pour un brûleur à gaz en permettant au gaz d'écouler dans un état tel qu'un disque rotatif (22) présentant un trou de communication (24) côté rotation est en contact étroit avec une face de contact (25) rapprochée, laquelle est la face inférieure d'un disque fixe (21) présentant un trou de communication (23) côté fixe, et que le trou de communication (24) côté rotation est mis en correspondance avec le trou de communication (23) côté fixe par rotation du disque rotatif (22), comprenant :
une unité constitutive (20) disposée séparément d'un corps principal (10), oú l'unité constitutive, peut être assemblée séparément du corps principal, ladite unité constitutive (20) étant un groupe de composants comprenant au moins le disque rotatif (22), le disque fixe (21) et un ressort (26) contraignant le disque rotatif (22) vers le disque fixe (21),
le corps principal (10) comprenant une partie de logement pour recevoir l'unité constitutive (20),
l'unité constitutive (20) présentant un guidage axial central (29) pour effectuer la mise en place du disque rotatif (22) et du disque fixe (21), un élément de transmission de puissance (28) prévu pour transmettre la puissance d'un moteur au disque rotatif (22), et une partie de retenue (30) fixée à une extrémité du guidage axial central (29).

2. Soupape de commande de gaz (100) selon la revendication 1,
où le guidage axial central (29) se dresse au centre du disque fixe (21),
un trou traversant (22a) est formé au centre du disque rotatif (22), et
la mise en place du disque rotatif (22) et du disque fixe (21) est effectuée par insertion du guidage axial central (29) dans le trou traversant (22a).

3. Soupape de commande de gaz (100) selon la revendication 1,
où le diamètre extérieur du disque rotatif (22) est inférieur au diamètre intérieur de la partie de logement.
